(19) Europäisches Patentamt / European Patent Office / Office européen des brevets

(11) **EP 3 010 168 B1**

(12) **EUROPEAN PATENT SPECIFICATION**

(45) Date of publication and mention of the grant of the patent:
**23.10.2019 Bulletin 2019/43**

(51) Int Cl.:
***H04J 3/06*** *(2006.01)*

(21) Application number: **15177710.9**

(22) Date of filing: **21.07.2015**

(54) **FREQUENCY CALIBRATION METHOD**

FREQUENZKALIBRIERVERFAHREN

PROCÉDÉ D'ÉTALONNAGE DE FRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2014 CN 201410554663**

(43) Date of publication of application:
**20.04.2016 Bulletin 2016/16**

(73) Proprietor: **Sercomm Corporation Taipei 115 (TW)**

(72) Inventor: **Lien, Chia-Hao 115 Taipei (TW)**

(74) Representative: **Krauns, Christian Wallinger Ricker Schlotter Tostmann Patent- und Rechtsanwälte Partnerschaft mbB Zweibrückenstraße 5-7 80331 München (DE)**

(56) References cited:
US-A- 5 689 688     US-A1- 2003 048 811
US-A1- 2013 080 817

• **BLETSAS A: "Evaluation of Kalman filtering for network time keeping", IEEE TRANSACTIONS ON ULTRASONICS, FERROELECTRICS AND FREQUENCY CONTROL, IEEE, US, vol. 52, no. 9, 1 September 2005 (2005-09-01), pages 1452-1460, XP011367468, ISSN: 0885-3010, DOI: 10.1109/TUFFC.2005.1516016**

**Description**

FIELD OF THE INVENTION

The present invention relates to a frequency calibration method, and more particularly, to a frequency calibration method utilizing a time server.

BACKGROUND OF THE INVENTION

Wireless communication technology has been widely used in people's daily life. The fourth generation (4G) of mobile telecommunications technology has been developed in response to the needs for higher transmission rate and better communication quality for mobile devices moving in high-speed environments. Long Term Evolution (LTE) is a standard for wireless communication of high-speed data for mobile phones and data terminals developed by the 3rd Generation Partnership Project (3GPP). According to the specification developed by the 3GPP, the modulated carrier frequency of each Evolved Universal Terrestrial Radio Access Network (E-UTRA) carrier configured by the base station (BS) shall be within the accuracy range in order to reduce the interference and facilitate handover between base stations. The carrier frequency accuracy requirements for the wide area BS, medium range BS, home BS are $\pm0.05$ppm, $\pm0.1$ppm, $\pm0.25$ppm, respectively. For a 1.9GHz carrier frequency, $\pm0.1$ ppm means that the allowed frequency error is only 190Hz.

Because of the strict requirement on the accuracy of the carrier frequency and high cost of a high precision oscillator, there is a need for a frequency calibration method for a wireless communication device in order to achieve frequency synchronization and meet the 3GPP specification.

The US 2003/0048811 A1 discloses methods, systems and computer program products for synchronizing clocks in a computer network. A first node clock is synchronized to a second node clock by establishing an initial value of a virtual second node clock at the first node. The initial value may be established based on the first node clock and a timing record received from the second node. A frequency bias adjustment factor is determined for the virtual second node clock based on a plurality of clock requests from the first node and a plurality of corresponding responses from the second node spaced apart in time. The responses from the second node include the timing record based on the second node clock. A time of the virtual second node clock is provided based on the frequency bias adjustment factor responsive to requests for the virtual second node clock at a time between requests.

The US 2013/0080817 A1 discloses a method of synchronizing a master clock and a slave clock. The method comprises transmitting a plurality of packets between a master device and a slave device, calculating a first skew between a first pair of the plurality of packets at the slave device and a second skew between the first pair at the master device, calculating a ratio between the first skew and the second skew, providing a slave clock frequency correction to the slave device, calculating a first packet trip delay using a time that the master device initiates sending a packet to the slave device, a time the master device receives a response from the slave device, a corrected time the slave device receives the packet, and a corrected time the slave device initiates sending the response, calculating a first offset based on the first packet trip delay, and providing the first offset to the slave device.

SUMMARY OF THE INVENTION

The disclosure is directed to a frequency calibration method for an electronic device. The clock frequency of the electronic device is calibrated by packets transferred back and forth between the electronic device and the time server.

In an embodiment, a frequency calibration method for an electronic device is provided according to appended claim 1.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

BRIEF DESCRIPTION OF THE DRAWINGS

The above objects and advantages of the present invention will become more readily apparent to those ordinarily skilled in the art after reviewing the following detailed description and accompanying drawings, in which:

FIG. 1 shows a timing diagram of packet transmission according to the network time protocol.

FIG. 2 shows a timing diagram of packet transmission according to an embodiment of the invention.

FIG. 3 shows a flowchart of a frequency calibration method according to a first embodiment of the invention.

FIG. 4 shows a flowchart of a frequency calibration method according to a second embodiment of the invention.

FIG. 5 shows a device using the frequency calibration method according to an embodiment of the invention.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION OF PREFERRED EMBODIMENTS

In a wireless communication system, frequency error of the carrier frequency is required to be within a specific range, and thus a base station in the system performs a process of frequency calibration. A small cell is taken for example for illustrating how to calibrate carrier frequency with network connection. A small cell, such as HeNodeB (HeNB), is an electronic device that transmits carrier signal such that a user equipment (UE), such as a cellular phone, may be connected to a mobile data network. The small cell may be connected via Internet to a time server, such as a network time protocol (NTP) server, to obtain precise time information.

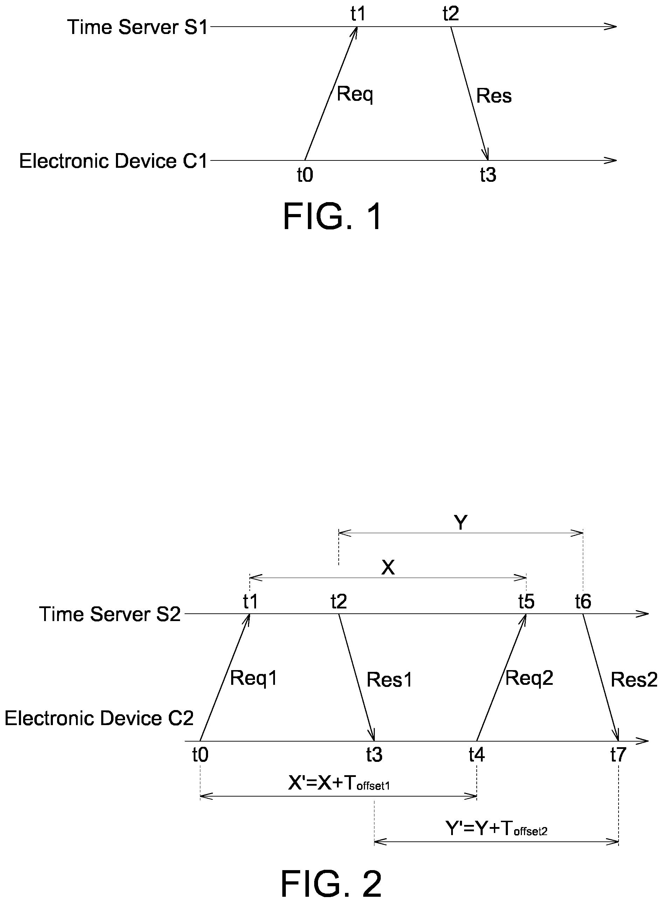

FIG. 1 shows a timing diagram of packet transmission according to the network time protocol. The electronic device C1 may be the small cell as described above, and the time server S1 may be the NTP server. The electronic device C1 transmits a request packet Req to the time server S1 at time instant t0. The time server S1 receives the request packet Req at time instant t1 and accordingly responds with a response packet Res at time instant t2. The time server S1 also records the timestamps t1 and t2 in the response packet Res. The electronic device C1 receives the response packet Res at time instant t3 and thus obtains the timestamps t1 and t2 corresponding to the time information of the time server S1.

The time instants t0 and t3 are recorded by the electronic device C1 itself. For example, the time instants t0 and t3 are obtained from a clock signal generated by an oscillator within the electronic device C1. On the other hand, the timestamps t1 and t2 are recorded by the time server S1. The timestamps t1 and t2 are obtained from a more precise clock signal in the time server S1. There may be a time offset $T_{offset}$ between the electronic device C1 and the time server S1. If the real propagation delay of the request packet Req is D, the difference between the timestamp t1 and the time instant t0 recorded by two different devices will be $D+T_{offset}$. The calculation of the time offset $T_{offset}$ is described below.

Assume the uplink communication delay and the downlink communication delay between the electronic device C1 and the time server S1 are equal, that is, the propagation delay of the request packet Req is equal to the propagation delay of the response packet Res. The relationships between the timestamps are:

$$t1 = t0 + D + T_{offset}$$

$$t3 + T_{offset} = t2 + D$$

$$T_{offset} = [(t1-t0)+(t2-t3)]/2$$

$$D = (t3-t0) - (t2-t1)$$

Based on the equations above, the time offset $T_{offset}$ and the propagation delay D may be calculated according to the time instants recorded by the electronic device C1 itself and the timestamps in the response packet Res. The time in the electronic device C1 may be adjusted to be the same as the time in the time server S1 according to the calculated time offset $T_{offset}$. If the packet transmission procedure as described above is initiated again after the time in the electronic device C1 has been adjusted, and the time offset $T_{offset}$ still exists, it means that there is an error in the clock frequency of the electronic device C1. The frequency error $f_{err}$ may be calculated according to the time offset $T_{offset}$ in order to adjust the clock frequency of the electronic device C1.

The method described above assumes the uplink communication delay is equal to the downlink communication delay so that the time offset $T_{offset}$ can be calculated. However, the assumption is not valid in an asymmetric network environment. For example, the electronic device C1 may be connected to the time server S1 via asymmetric digital subscriber line (ADSL). In an environment where uplink communication delay differs from downlink communication delay, the packet delay variation (PDV) between uplink and downlink packets has to be calculated first in order to calculate the time offset $T_{offset}$. The PDV calculation may be performed by sending a large quantity of packets in a short period of time and a complicated PDV algorithm, which results in network bandwidth overhead and performance overhead to the processor.

A frequency calibration method suitable for both symmetric and asymmetric network environments is provided in the following embodiment. The clock frequency of the electronic device can be calibrated even in a system where uplink delay differs from downlink delay.

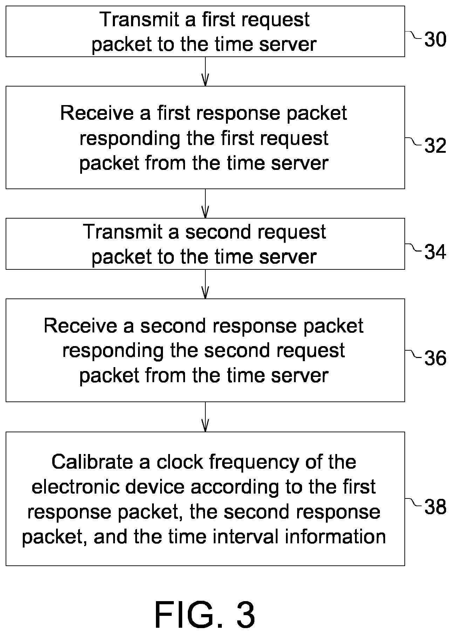

Please refer to FIG. 2 and FIG. 3. FIG. 2 shows a timing diagram of packet transmission according to an embodiment of the invention. FIG. 3 shows a flowchart of a frequency calibration method according to a first embodiment of the invention. The electronic device C2 in FIG. 2 may be a small cell. The time server S2 may be a network time protocol (NTP) server or a precision time protocol (PTP) server. The electronic device C1 is connected to the time server S2 via network.

A frequency calibration method for an electronic device is provided. The frequency calibration method includes the following steps:

Step 30: the electronic device C2 transmits a first request packet Req1 to the time server S2 at a device first time instant t0. The time server S2 receives the first request packet Req1 at a server first time instant t1 and accordingly responds with a first response packet Res1 at a server second time instant t2. The time server S2 also records the timestamps t1 and t2 in the first response packet Res1. Step 32: the electronic device C2 receives the first response packet Res1 at a device second time instant t3 and thus obtains the timestamps t1 and t2.

Step 34: after the electronic device C2 waits a time interval, such as a few tens or hundreds of seconds, the electronic device C2 transmits a second request packet Req2 to the time server S2 at a device third time instant t4. A device first time interval X' is equal to a difference between the device first time instant t0 and the device third time instant t4 (for example, X' = t4-t0). The time server S2 receives the second request packet Req2 at a server third time instant t5 and accordingly responds with a second response packet Res2 at a server fourth time instant t6. The time server S2 also records the timestamps t5 and t6 in the second response packet Res2. Step 36: the electronic device C2 receives the second response packet Res2 at a device fourth time instant t7 and thus obtains the timestamps t5 and t6. A device second time interval Y' is equal to a difference between the device second time instant t3 and the device fourth time instant t7 (for example, Y' = t7-t3).

In the above steps, packets are transferred back and forth twice between the electronic device C2 and the time server S2. Information related to time interval between two packet transmissions and time interval between two packet receptions can thus be obtained. The time information of the time server S2 can be obtained as well from the first response packet Res1 and the second response packet Res2. In step 38: the clock frequency $f_{CLK}$ of the electronic device C2 is calibrated according to the first response packet Res1, the second response packet Res2, and at least one of the device first time interval X' and the device second time interval Y'.

Specifically, the first response packet Res1 includes a server first timestamp t1 and a server second timestamp t2. The second response packet Res2 includes a server third timestamp t3 and a server fourth timestamp t4. A server first time interval X may be obtained by calculating a difference between the server first timestamp t1 and the server third timestamp t5 (for example, X = t5-t1). A server second time interval Y may be obtained by calculating a difference between the server second timestamp t2 and the server fourth timestamp t6 (for example, Y = t6-t2).

Assume the uploading time of the first request packet Req1 and the uploading time of the second request packet Req2 are equal, a first time offset $T_{offset1}$ between the device first time interval X' and the server first time interval X (X' = X+$T_{offset1}$) is caused by the frequency error $f_{err}$ of the electronic device C2. Similarly, assume the downloading time of the first response packet Res1 and the downloading time of the second response packet Res2 are equal, a second time offset $T_{offset2}$ between the second device time interval Y' and the second server time interval Y (Y' = Y+$T_{offset2}$) is caused by the frequency error $f_{err}$ of the electronic device C2. The frequency error $f_{err}$ may be obtained according to the time offset information in order to calibrate the clock frequency $f_{CLK}$ of the electronic device C2.

A numerous calculation methods are available in practical applications. Several methods are described below as examples.

Method 1: depend on the time interval between two uploading packets. The first time offset $T_{offset1}$ is equal to the difference between the device first time interval X' and the server first time interval X ($T_{offset1}$ = X'-X). The first time offset $T_{offset1}$ results from accumulation of a first frequency error $f_{err1}$ over a period of time. The first frequency error $f_{err1}$ may be the amount of time offset per second of the electronic device C2. Because the time server S2 is relatively precise in time, the server first time interval X, instead of the device first time interval X', is used as the denominator when calculating the amount of time offset per second. The first frequency error $f_{err1}$ is equal to a ratio of the first time offset $T_{offset1}$ to the server first time interval X. For example, $f_{err1} = T_{offset1}/X = [(t4-t0)-(t5-t1)]/(t5-t1)$.

Method 2: depend on the time interval between two downloading packets. The second time offset $T_{offset2}$ is equal to the difference between the device second time interval Y' and the server second time interval Y ($T_{offset2} = Y'-Y$). The second frequency error $f_{err2}$ is equal to a ratio of the second time offset $T_{offset2}$ to the server second time interval Y. For example, $f_{err2} = T_{offset2}/Y = [(t7-t3)-(t6-t2)]/(t6-t2)$.

Method 3: take both uploading and downloading into consideration. The first frequency error $f_{err1}$ and the second frequency error $f_{err2}$ may be calculated as described above. A third frequency error $f_{err3}$ is calculated according to the first frequency error $f_{err1}$ and the second frequency error $f_{err2}$. The clock frequency $f_{CLK}$ of the electronic device C2 is adjusted according to the third frequency error $f_{err3}$. The third frequency error $f_{err3}$ may be a linear combination of the first frequency error $f_{err1}$ and the second frequency error $f_{err2}$. In one embodiment, the third frequency error $f_{err3}$ may be calculated as:

$$f_{err3} = \alpha * f_{err1} + \beta * f_{err2}\,(\alpha, \beta \in [0,1], \alpha + \beta = 1)$$

A practical example is given here for a better understanding. The device first time interval X' between transmitting the first request packet Req1 and transmitting the second request packet Req2 is equal to 400s. Based on the timestamps recorded in the received first response packet Res1 and second response packet Res2, the server first time interval X may be calculated as 400.0006s. The first frequency error $f_{err1} = (400-400.0006)/(400.0006) = -1.5ppm$. The electronic device C2 may adjusts the clock frequency $f_{CLK}$ according to the first frequency error $f_{err1}$.

The frequency calibration method as proposed in the embodiment shown in FIG. 2 and FIG. 3 calculates the frequency error according to the device time interval and the server time interval. Specifically, the method depends on the time interval between two packets uploaded (corresponding to time instants t0, t1, t4, t5 in FIG. 2) and/or the time interval between two packets downloaded (corresponding to time instants t2, t3, t6, t7 in FIG. 2). The calculation of the frequency error may depend on only a single direction of network transmission. Therefore the calculation is not affected by inconsistent speed between uplink and downlink connection. The frequency calibration method proposed herein may be applied to symmetric network systems as well as asymmetric network systems.

Please refer to FIG. 2, if the uploading speed is lower than the downloading speed, the time interval between t0 and t1 will be longer than the time interval between t2 and t3. The absolute value of the slope of the line Req1 will be smaller than the absolute value of the slope of the line Res1. The slope of the line Req2 changes accordingly. The line Req2 is still substantially parallel to the line Req1. Therefore the first time offset $T_{offset1}$ between the electronic device C2 and the time server S2 is still caused by the frequency error $f_{err}$ of the electronic device C2. The calculation of the first time offset $T_{offset1}$ is not affected by the inconsistent speed between uplink and downlink transmission.

In addition, the frequency calibration method proposed herein involves simple calculation and thus does not require enormous computation capability. Furthermore, the frequency calibration method does not require time synchronization or phase synchronization. The clock phase of the electronic device does not have to be synchronized to the clock phase of the time server. Thus the hardware overhead of the electronic device and the processing time overhead can be reduced when implementing the frequency calibration method disclosed herein.

As described above, the frequency calibration method in the above embodiment assumes the propagation delay of each uploading packet is the same, and the propagation delay of each downloading packet is the same. To further consider possible delay variation between uploading packets, a second embodiment is provided.

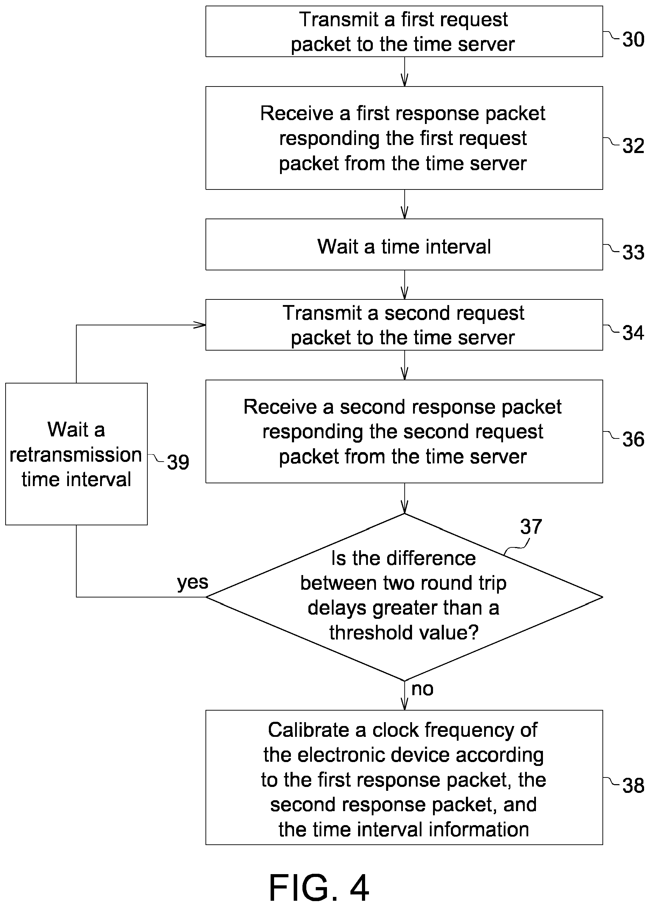

FIG. 4 shows a flowchart of a frequency calibration method according to a second embodiment of the invention. In step 33, the electronic device C2 waits a time interval before sending the second request packet Req2 as in the first embodiment. The second embodiment further includes step 37: determine whether the difference between two round trip delays is greater than a threshold value Th or not. If no, proceed to step 38: calculate the frequency error $f_{err}$ as in the first embodiment. If yes, proceed to step 39: wait a retransmission time interval Tr. After the retransmission time interval Tr, repeat step 34 to transmit the second request packet Req2 to the time server S2 again.

When the electronic device C2 receives the first response packet Res1, the electronic device C2 calculates a first round trip delay RTD1 between transmitting the first request packet Req1 and receiving the first response packet Res1. As shown in FIG. 2, the first round trip delay RTD1 may be calculated as (t3-t0) when considering the time instants in the electronic device C2 only. Alternatively, the first round trip delay RTD1 may also be calculated as [(t3-t0)-(t2-t1)] to remove the processing time consumed in the time server S2. When receiving the second response packet Res2, the electronic device C2 calculates a second round trip delay RTD2. Similar to the first round trip delay RTD1, the second round trip delay RTD2 may be (t7-t4) or [(t7-t4)-(t6-t5)].

If the difference between the first round trip delay RTD1 and the second round trip delay RTD2 ($|RTD2-RTD1|$)

is greater than a threshold value Th, it means that the propagation delay variation of these two packet transmissions is too large. This may be due to two different uploading delays, two different downloading delays, or excessive loading in one of the processors. In this circumstance, the propagation delays are significantly different, and thus this sample is not taken into consideration. The electronic device C2 retransmits the second request packet Req2 to the time server S2 after waiting a retransmission time interval Tr. The electronic device C2 again determines whether the second round trip delay RTD2 is close enough to the first round trip delay RTD1. The frequency error $f_{err}$ is calculated only when the second round trip delay RTD2 is close enough to the first round trip delay RTD1.

The device first time interval X' between two packet transmissions is for example 300s. The retransmission time interval Tr when a sample is abandoned is for example 1s. The retransmission time interval Tr is smaller than the device first time interval X'.

In practice, the electronic device C2 may transmit packets multiple times in order to obtain a more precise calculation result of the frequency error $f_{err}$. In the embodiments disclosed above, the request packets are transmitted twice. In an actual implementation, the request packets may be transmitted for 5 times, 10 times, or even more. The number of packet transmissions is not limited thereto. The time interval between each packet transmission may be the device first time interval X'. Every packet transmission is regarded as a sample. Judgment regarding the round trip delay RTD is made for every sample in order to determine whether a retransmission is needed. Because the retransmission time interval Tr is much smaller than the device first time interval X' in practice, there may be multiple chances and hence the probability of a successful sample (satisfying the condition that the difference between two round trip delays is small enough) is increased.

When the time interval between samples becomes longer, the time offset $T_{offset}$ caused by accumulating the frequency error $f_{err}$ becomes larger correspondingly, and the calculation becomes less affected by the network transmission rate. As the electronic device C2 takes multiple samples, the later sample is separated from the first sample by a longer time interval, thus the calculated frequency error $f_{err}$ becomes more accurate. In one embodiment, the frequency error $f_{err\_i}$ of each sample i is calculated and recorded. When the variation between multiple frequency errors $f_{err\_i}$ converges to a predetermined range, such as $\pm0.1$ppm, the calculation is deemed accurate and no further sample is required. The multiple frequency errors $f_{err\_i}$ may further be processed, such as being averaged, to correct the clock frequency $f_{CLK}$ of the electronic device C2.

For a time server S2 that is further away from the electronic device C2, for example a time server located in a foreign country, the variation between multiple round trip delays may be too large to pass the RTD criteria set in step 37. In this case, the initial threshold value Th may be adjusted (for example, increased) to enhance the probability of a valid sample. In other words, the threshold value Th may be adjusted dynamically.

With a larger threshold value Th, the tolerable range of the difference between two round trip delays is larger, and hence the calculation accuracy becomes more vulnerable to network delay variations. In one embodiment, the device first time interval X' may increase as the threshold value increases. The time interval between each sample is prolonged, and hence the time offset $T_{offset}$, which is accumulation of the frequency error $f_{err}$ over time, is increased. In this way the calculation becomes less affected by the round trip delay variations.

Although multiple samples and judging validity of samples increases the number of packets required, the size of each packet in the proposed frequency calibration method is very small. Moreover, each valid sample is separated by a long duration of time. Therefore the network bandwidth is barely affected. As compared to the method involving a packet delay variation (PDV) algorithm, the proposed frequency calibration method greatly reduces the number of packets required.

The proposed frequency calibration method may be implemented in an ordinary base station without requiring additional hardware support. In one embodiment, the program code regarding the frequency calibration method may be stored in a non-transitory computer readable medium. The processor in the base station loads the program code and executes the program. The frequency calibration method may also be implemented by an application specific digital signal processing circuit.

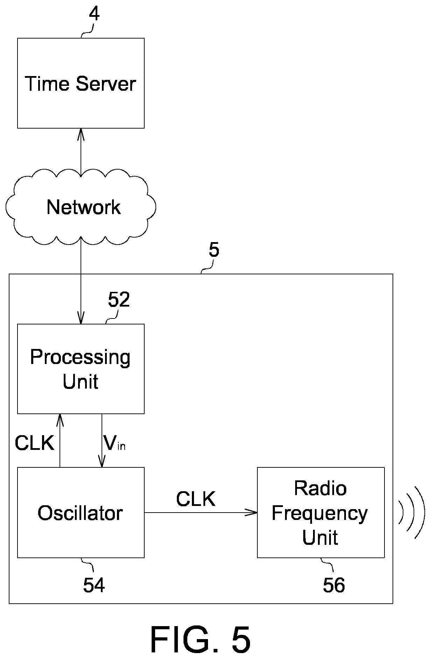

For a better illustration of an application of the frequency calibration method in this disclosure, FIG. 5 shows a device using the frequency calibration method according to an embodiment of the invention. The electronic device 5 includes a processing unit 52, an oscillator 54, and a radio frequency (RF) unit 56. The electronic device 5 may be a small cell. The processing unit 52 may include a processor and a memory. The program code regarding the proposed frequency calibration method may be stored in the memory, and the processor loads the program code to execute the program. The oscillator 54 provides a clock signal CLK to the processing unit 52 as well as the RF unit 56. The clock signal CLK provides a system time for the electronic device 5 (clock signal of the processor). In addition, the clock signal CLK fed into the RF unit 56 generates the required carrier frequency for wireless signal transmission/reception. The processing unit 52 and the RF unit 56 may individually include a frequency multiplier (not shown in FIG. 5) to multiply the frequency of the clock signal CLK generated by the oscillator 54.

The processing unit 52 is connected to the time server 4, such as NTP server, via network. The processing unit 52 performs the frequency calibration method as disclosed in the previous embodiments to calculate the frequency

error $f_{err}$. The frequency error $f_{err}$ may be converted by a digital to analog converter (DAC) to generate a control voltage $V_{in}$ for the oscillator 54. The oscillator 54 may be a voltage-controlled oscillator (VCO). The oscillator 54 changes the clock frequency $f_{CLK}$ of the clock signal CLK in response to the control voltage $V_{in}$. Because the clock frequency $f_{CLK}$ is calibrated according to the frequency error $f_{err}$, the carrier frequency generated by the RF unit 56 can meet the minimum requirement for the frequency error in the 3GPP specification.

**Claims**

1. A frequency calibration method for an electronic device (C2), wherein the frequency calibration method comprises:

   (30) transmitting a first request packet (Req1) to a time server (S2) at a device first time instant (t0);
   (32) receiving a first response packet (Res1) responding the first request packet (Req1) from the time server (S2) at a device second time instant (t3);
   (34) transmitting a second request packet (Req2) to the time server (S2) at a device third time instant (t4), wherein a device first time interval (X') is equal to a difference between the device first time instant (t0) and the device third time instant (t4);
   (36) receiving a second response packet (Res2) responding the second request packet (Req2) from the time server (S2) at a device fourth time instant (t7), wherein a device second time interval (Y') is equal to a difference between the device second time instant (t3) and the device fourth time instant (t7); and
   (38) calibrating a clock frequency of the electronic device (C2) according to the first response packet (Res1), the second response packet (Res2), and at least one of the device first time interval (X') and the device second time interval (Y'), **characterized in that** the frequency calibration method further comprises:

      calculating a first round trip delay, RTD1, between transmitting the first request packet (Req1) and receiving the first response packet (Res1);
      calculating a second round trip delay, RTD2, between transmitting the second request packet (Req2) and receiving the second response packet (Res2); and
      when a difference between the first round trip delay, RTD1, and the second round trip delay, RTD2, is greater than a threshold value, Th, retransmitting the second request packet (Req2) to the time server (S2) after waiting a retransmission time interval, Tr.

2. The frequency calibration method according to claim 1, **characterized in that** the first response packet (Res1) comprises:

   a server first timestamp (t1), representing the time that the server receives the first request packet (Req1); and
   a server second timestamp (t2), representing the time that the server transmits the first response packet (Res1); and
   the second response packet (Res2) comprises:

      a server third timestamp (t5), representing the time that the server receives the second request packet (Req2), wherein a server first time interval (X) is equal to a difference between the server first timestamp (t1) and the server third timestamp (t5); and
      a server fourth timestamp (t6), representing the time that the server transmits the second response packet (Res2), wherein a server second time interval (Y) is equal to a difference between the server second timestamp (t2) and the server fourth timestamp (t6).

3. The frequency calibration method according to claim 2, **characterized in that** the step of calibrating the clock frequency of the electronic device (C2) comprises:

   calculating a first time offset ($T_{offset1}$), the first time offset ($T_{offset1}$) being equal to a difference between the device first time interval (X') and the server first time interval (X);
   calculating a first frequency error ($f_{err1}$), the first frequency error ($f_{err1}$) being equal to a ratio of the first time offset ($T_{offset1}$) to the server first time interval (X); and
   adjusting the clock frequency of the electronic device (C2) according to the first frequency error ($f_{err1}$).

4. The frequency calibration method according to claim 2 or 3, **characterized in that** the step of calibrating the clock frequency of the electronic device (C2) comprises:

calculating a second time offset ($T_{offset2}$), the second time offset ($T_{offset2}$) being equal to a difference between the device second time interval (Y') and the server second time interval (Y);

calculating a second frequency error ($f_{err2}$), the second frequency error ($f_{err2}$) being equal to a ratio of the second time offset ($T_{offset2}$) to the server second time interval (Y); and

adjusting the clock frequency of the electronic device (C2) according to the second frequency error ($f_{err2}$).

5. The frequency calibration method according to any one of the claims 2 to 4, **characterized in that** the step of calibrating the clock frequency of the electronic device (C2) comprises:

calculating a first time offset ($T_{offset1}$), the first time offset ($T_{offset1}$) being equal to a difference between the device first time interval (X') and the server first time interval (X);

calculating a first frequency error ($f_{err1}$), the first frequency error ($f_{err1}$) being equal to a ratio of the first time offset ($T_{offset1}$) to the server first time interval (X); and

calculating a second time offset ($T_{offset2}$), the second time offset ($T_{offset2}$) being equal to a difference between the device second time interval (Y') and the server second time interval (Y);

calculating a second frequency error ($f_{err2}$), the second frequency error ($f_{err2}$) being equal to a ratio of the second time offset ($T_{offset2}$) to the server second time interval (Y); and

adjusting the clock frequency of the electronic device (C2) according to a linear combination of the first frequency error ($f_{err1}$) and the second frequency error ($f_{err2}$).

6. The frequency calibration method according to any one of the claims 1 to 5, **characterized in that** the retransmission time interval, Tr, is smaller than the device first time interval (X').

7. The frequency calibration method according to any one of the claims 1 to 6, **characterized in that** the method further comprises adjusting the threshold value, Th, dynamically.

8. The frequency calibration method according to claim 7, **characterized in that** the method further comprises adjusting the device first time interval (X') according to the threshold value, Th.

9. The frequency calibration method according to any one of the claims 1 to 8, **characterized in that** the time server (S2) is a network time protocol server or a precision time protocol server.

**Patentansprüche**

1. Frequenzkalibrierungsverfahren für ein elektronisches Gerät (C2), wobei das Frequenzkalibrierungsverfahren umfasst:

(30) ein Übertragen eines ersten Anforderungspakets (Req1) an einen Zeitserver (S2) zu einem ersten Gerätezeitpunkt (t0),

(32) ein Empfangen eines ersten Antwortpakets (Res1), das auf das erste Anforderungspaket (Req1) von dem Zeitserver (S2) zu einem zweiten Gerätezeitpunkt (t3) antwortet,

(34) ein Übertragen eines zweiten Anforderungspakets (Req2) an den Zeitserver (S2) zu einem dritten Gerätezeitpunkt (t4), wobei ein erstes Gerätezeitintervall (X') gleich einer Differenz zwischen dem ersten Gerätezeitpunkt (t0) und dem dritten Gerätezeitpunkt (t4) ist,

(36) ein Empfangen eines zweiten Antwortpakets (Res2), das auf das zweite Anforderungspaket (Req2) von dem Zeitserver (S2) zu einem vierten Gerätezeitpunkt (t7) antwortet, wobei ein zweites Zeitintervall (Y') des Geräts gleich einer Differenz zwischen dem zweiten Gerätezeitpunkt (t3) und dem vierten Gerätezeitpunkt (t7) ist, und

(38) ein Kalibrieren einer Taktfrequenz des elektronischen Geräts (C2) gemäß dem ersten Antwortpaket (Res1), dem zweiten Antwortpaket (Res2) und mindestens einem von dem ersten Zeitintervall (X') und / oder dem zweiten Zeitintervall (Y') des Geräts, **dadurch gekennzeichnet, dass** das Frequenzkalibrierungsverfahren ferner umfasst:

ein Berechnen einer ersten Umlaufverzögerung, RTD1, zwischen dem Senden des ersten Anforderungspakets (Req1) und dem Empfangen des ersten Antwortpakets (Res1),

ein Berechnen einer zweiten Umlaufverzögerung, RTD2, zwischen dem Senden des zweiten Anforderungspakets (Req2) und dem Empfangen des zweiten Antwortpakets (Res2), und

wenn eine Differenz zwischen der ersten Umlaufverzögerung, RTD1, und der zweiten Umlaufverzögerung, RTD2, größer als ein Schwellenwert, Th, ist, ein erneutes Senden des zweiten Anforderungspakets (Req2) an den Zeitserver (S2), nachdem ein Zeitintervall, Tr, des erneuten Sendens abgewartet worden ist.

2. Frequenzkalibrierungsverfahren nach Anspruch 1, **dadurch gekennzeichnet, dass** das erste Antwortpaket (Res1) aufweist:

einen ersten Zeitstempel (t1) des Servers, der die Zeit darstellt, zu der der Server das erste Anforderungspaket empfängt (Req1), und
einen zweiten Zeitstempel (t2) des Servers, der die Zeit darstellt, zu der der Server das erste Antwortpaket (Res1) sendet, und
dass das zweite Antwortpaket (Res2) aufweist:

einen dritten Zeitstempel (t5) des Servers, der die Zeit darstellt, zu der der Server das zweite Anforderungspaket (Req2) empfängt, wobei ein erstes Zeitintervall (X) des Servers gleich einer Differenz zwischen dem ersten Zeitstempel (t1) des Servers und dem dritten Zeitstempel (t5) des Servers ist, und
einen vierten Zeitstempel (t6) des Servers, der die Zeit darstellt, zu der der Server das zweite Antwortpaket (Res2) sendet, wobei ein zweites Zeitintervall (Y) des Servers gleich einer Differenz zwischen dem zweiten Zeitstempel (t2) des Servers und dem vierten Zeitstempel (t6) des Servers ist.

3. Frequenzkalibrierungsverfahren nach Anspruch 2, **dadurch gekennzeichnet, dass** der Schritt des Kalibrierens der Taktfrequenz des elektronischen Geräts (C2) umfasst:

ein Berechnen eines ersten Zeitversatzes ($T_{offset1}$), wobei der erste Zeitversatz ($T_{offset1}$) gleich einer Differenz zwischen dem ersten Zeitintervall (X') des Geräts und dem ersten Zeitintervall (X) des Servers ist,
ein Berechnen eines ersten Frequenzfehlers ($f_{err1}$), wobei der erste Frequenzfehler ($f_{err1}$) gleich einem Verhältnis des ersten Zeitversatzes ($T_{offset1}$) zu dem ersten Zeitintervall (X) des Servers ist, und
ein Einstellen der Taktfrequenz des elektronischen Geräts (C2) gemäß dem ersten Frequenzfehler ($f_{err1}$).

4. Frequenzkalibrierungsverfahren nach Anspruch 2 oder 3, **dadurch gekennzeichnet, dass** der Schritt des Kalibrierens der Taktfrequenz des elektronischen Geräts (C2) umfasst:

ein Berechnen eines zweiten Zeitversatzes ($T_{offset2}$), wobei der zweite Zeitversatz ($T_{offset2}$) gleich einer Differenz zwischen dem zweiten Zeitintervall (Y') des Geräts und dem zweiten Zeitintervall (Y) des Servers ist,
ein Berechnen eines zweiten Frequenzfehlers ($f_{err2}$), wobei der zweite Frequenzfehler ($f_{err2}$) gleich einem Verhältnis des zweiten Zeitversatzes ($T_{offset2}$) zu dem zweiten Zeitintervall (Y) des Servers ist, und
ein Anpassen der Taktfrequenz des elektronischen Geräts (C2) gemäß dem zweiten Frequenzfehler ($f_{err2}$).

5. Frequenzkalibrierungsverfahren nach einem der Ansprüche 2 bis 4, **dadurch gekennzeichnet, dass** der Schritt des Kalibrierens der Taktfrequenz des elektronischen Geräts (C2) umfasst:

ein Berechnen eines ersten Zeitversatzes ($T_{offset1}$), wobei der erste Zeitversatz ($T_{offset1}$) gleich einer Differenz zwischen dem ersten Zeitintervall (X') des Geräts und dem ersten Zeitintervall (X) des Servers ist,
ein Berechnen eines ersten Frequenzfehlers ($f_{err1}$), wobei der erste Frequenzfehler ($f_{err1}$) gleich einem Verhältnis des ersten Zeitversatzes ($T_{offset1}$) zu dem ersten Zeitintervall des Servers (X) ist, und
ein Berechnen eines zweiten Zeitversatzes ($T_{offset2}$), wobei der zweite Zeitversatz ($T_{offset2}$) gleich einer Differenz zwischen dem zweiten Zeitintervall (Y') des Geräts und dem zweiten Zeitintervall (Y) des Servers ist,
ein Berechnen eines zweiten Frequenzfehlers ($f_{err2}$), wobei der zweite Frequenzfehler ($f_{err2}$) gleich einem Verhältnis des zweiten Zeitversatzes ($T_{offset2}$) zu dem zweiten Zeitintervall des Servers (Y) ist, und
ein Einstellen der Taktfrequenz des elektronischen Geräts (C2) gemäß einer linearen Kombination des ersten Frequenzfehlers ($f_{err1}$) und des zweiten Frequenzfehlers ($f_{err2}$).

6. Frequenzkalibrierungsverfahren nach einem der Ansprüche 1 bis 5, **dadurch gekennzeichnet, dass** das Zeitintervall, Tr, der erneuten Übertragung kleiner als das erste Zeitintervall (X') des Geräts ist.

7. Frequenzkalibrierungsverfahren nach einem der Ansprüche 1 bis 6, **dadurch gekennzeichnet, dass** das Verfahren ferner ein dynamisches Einstellen des Schwellenwerts, Th, umfasst.

8. Frequenzkalibrierungsverfahren nach Anspruch 7, **dadurch gekennzeichnet, dass** das Verfahren ferner ein Einstellen des ersten Zeitintervalls (X') des Geräts gemäß dem Schwellenwert, Th, umfasst.

9. Frequenzkalibrierungsverfahren nach einem der Ansprüche 1 bis 8, **dadurch gekennzeichnet, dass** der Zeitserver (S2) ein Netzwerkzeitprotokollserver oder ein Präzisionszeitprotokollserver ist.

**Revendications**

1. Procédé d'étalonnage de fréquence pour un dispositif électronique (C2), dans lequel le procédé d'étalonnage de fréquence comprend :

   (30) la transmission d'un premier paquet de demande (Req1) à un serveur temporel (S2) à un premier instant temporel de dispositif (t0) ;
   (32) la réception d'un premier paquet de réponse (Res1) répondant au premier paquet de demande (Req1) provenant du serveur temporel (S2) à un deuxième instant temporel de dispositif (t3) ;
   (34) la transmission d'un second paquet de demande (Req2) au serveur temporel (S2) à un troisième instant temporel de dispositif (t4), dans lequel un premier intervalle de temps de dispositif (X') est égal à une différence entre le premier instant temporel de dispositif (t0) et le troisième instant temporel de dispositif (t4) ;
   (36) la réception d'un second paquet de réponse (Res2) répondant au second paquet de demande (Req2) provenant du serveur temporel (S2) à un quatrième instant temporel de dispositif (t7), dans lequel un second intervalle de temps de dispositif (Y') est égal à une différence entre le deuxième instant temporel de dispositif (t3) et le quatrième instant temporel de dispositif (t7) ; et
   (38) l'étalonnage d'une fréquence d'horloge du dispositif électronique (C2) conformément au premier paquet de réponse (Res1), au second paquet de réponse (Res2), et à au moins un parmi le premier intervalle de temps de dispositif (X') et le second intervalle de temps de dispositif (Y'), **caractérisé en ce que** le procédé d'étalonnage de fréquence comprend en outre :

   le calcul d'un premier temps de propagation en boucle, RTD1, entre la transmission du premier paquet de demande (Req1) et la réception du premier paquet de réponse (Res1) ;
   le calcul d'un second temps de propagation en boucle, RTD2, entre la transmission du second paquet de demande (Req2) et la réception du second paquet de réponse (Res2) ; et
   lorsqu'une différence entre le premier temps de propagation en boucle, RTD1, et le second temps de propagation en boucle, RTD2, est supérieure à une valeur seuil, Th, la retransmission du second paquet de demande (Req2) au serveur temporel (S2) après avoir attendu un intervalle de temps de retransmission, Tr.

2. Procédé d'étalonnage de fréquence selon la revendication 1, **caractérisé en ce que** le premier paquet de réponse (Res1) comprend :

   une première estampille temporelle de serveur (t1), représentant le moment où le serveur reçoit le premier paquet de demande (Req1) ; et
   une deuxième estampille temporelle de serveur (t2), représentant le moment où le serveur transmet le premier paquet de réponse (Res1) ; et
   le second paquet de réponse (Res2) comprend :

   une troisième estampille temporelle de serveur (t5), représentant le moment où le serveur reçoit le second paquet de demande (Req2), dans lequel un premier intervalle de temps de serveur (X) est égal à une différence entre la première estampille temporelle de serveur (t1) et la troisième estampille temporelle de serveur (t5) ; et
   une quatrième estampille temporelle de serveur (t6), représentant le moment où le serveur transmet le second paquet de réponse (Res2), dans lequel un second intervalle de temps de serveur (Y) est égal à une différence entre la deuxième estampille temporelle de serveur (t2) et la quatrième estampille temporelle de serveur (t6).

3. Procédé d'étalonnage de fréquence selon la revendication 2, **caractérisé en ce que** l'étape d'étalonnage de la fréquence d'horloge du dispositif électronique (C2) comprend :

le calcul d'un premier décalage temporel ($T_{offset1}$), le premier décalage temporel ($T_{offset1}$) étant égal à une différence entre le premier intervalle de temps de dispositif (X') et le premier intervalle de temps de serveur (X) ; le calcul d'une première erreur de fréquence ($f_{err1}$), la première erreur de fréquence ($f_{err1}$) étant égale à un rapport du premier décalage temporel ($T_{offset1}$) au premier intervalle de temps de serveur (X) ; et le réglage de la fréquence d'horloge du dispositif électronique (C2) conformément à la première erreur de fréquence ($f_{err1}$).

4. Procédé d'étalonnage de fréquence selon la revendication 2 ou 3, **caractérisé en ce que** l'étape d'étalonnage de la fréquence d'horloge du dispositif électronique (C2) comprend :

le calcul d'un second décalage temporel ($T_{offset2}$), le second décalage temporel ($T_{offset2}$) étant égal à une différence entre le second intervalle de temps de dispositif (Y') et le second intervalle de temps de serveur (Y) ; le calcul d'une seconde erreur de fréquence ($f_{err2}$), la seconde erreur de fréquence ($f_{err2}$) étant égale à un rapport du second décalage temporel ($T_{offset2}$) au second intervalle de temps de serveur (Y) ; et le réglage de la fréquence d'horloge du dispositif électronique (C2) conformément à la seconde erreur de fréquence ($f_{err2}$).

5. Procédé d'étalonnage de fréquence selon l'une quelconque des revendications 2 à 4, **caractérisé en ce que** l'étape d'étalonnage de la fréquence d'horloge du dispositif électronique (C2) comprend :

le calcul d'un premier décalage temporel ($T_{offset1}$), le premier décalage temporel ($T_{offset1}$) étant égal à une différence entre le premier intervalle de temps de dispositif (X') et le premier intervalle de temps de serveur (X) ; le calcul d'une première erreur de fréquence ($f_{err1}$), la première erreur de fréquence ($f_{err1}$) étant égale à un rapport du premier décalage temporel ($T_{offset1}$) au premier intervalle de temps de serveur (X) ; et le calcul d'un second décalage temporel ($T_{offset2}$), le second décalage temporel ($T_{offset2}$) étant égal à une différence entre le second intervalle de temps de dispositif (Y') et le second intervalle de temps de serveur (Y) ; le calcul d'une seconde erreur de fréquence ($f_{err2}$), la seconde erreur de fréquence ($f_{err2}$) étant égale à un rapport du second décalage temporel ($T_{offset2}$) au second intervalle de temps de serveur (Y) ; et le réglage de la fréquence d'horloge du dispositif électronique (C2) conformément à une combinaison linéaire de la première erreur de fréquence ($f_{err1}$) et de la seconde erreur de fréquence ($f_{err2}$).

6. Procédé d'étalonnage de fréquence selon l'une quelconque des revendications 1 à 5, **caractérisé en ce que** l'intervalle de temps de retransmission, Tr, est plus petit que le premier intervalle de temps de dispositif (X').

7. Procédé d'étalonnage de fréquence selon l'une quelconque des revendications 1 à 6, **caractérisé en ce que** le procédé comprend en outre le réglage de la valeur seuil, Th, de manière dynamique.

8. Procédé d'étalonnage de fréquence selon la revendication 7, **caractérisé en ce que** le procédé comprend en outre le réglage du premier intervalle de temps de dispositif (X') conformément à la valeur seuil, Th.

9. Procédé d'étalonnage de fréquence selon l'une quelconque des revendications 1 à 8, **caractérisé en ce que** le serveur temporel (S2) est un serveur de protocole horaire en réseau ou un serveur de protocole horaire de précision.

FIG. 1

FIG. 2

Transmit a first request
packet to the time server ~30

Receive a first response packet
responding the first request
packet from the time server ~32

Transmit a second request
packet to the time server ~34

Receive a second response packet
responding the second request
packet from the time server ~36

Calibrate a clock frequency of the
electronic device according to the first
response packet, the second response
packet, and the time interval information ~38

FIG. 3

Transmit a first request
packet to the time server　　～30

Receive a first response packet
responding the first request
packet from the time server　　～32

Wait a time interval　　～33

Transmit a second request
packet to the time server　　～34

Wait a
retransmission
time interval　～39

Receive a second response packet
responding the second request
packet from the time server　　～36

Is the difference
between two round trip
delays greater than a
threshold value?　　37

yes

no

Calibrate a clock frequency of
the electronic device according
to the first response packet, the
second response packet, and
the time interval information　　～38

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030048811 A1
- US 20130080817 A1